# EUROPÄISCHE PATENTSCHRIFT

(11) **EP 0 557 869 B1**
(45) Veröffentlichungstag und Bekanntmachung des Hinweises auf die Patenterteilung: **01.05.1996**
(21) Anmeldenummer: 93102429.3
(22) Anmeldetag: 17.02.1993
(51) Int. Cl.: B60Q 1/068

(54) **Scheinwerfer für Fahrzeuge**
Vehicle headlamp
Phare pour véhicule

(30) Priorität: 27.02.1992 DE 4206027
(43) Veröffentlichungstag der Anmeldung: 01.09.1993
(73) Patentinhaber: Hella KG Hueck & Co., D-59552 Lippstadt (DE)
(72) Erfinder: Lutterbeck, Josef, W-4780 Lippstadt (DE)

(56) Entgegenhaltungen:
- EP-A- 0 393 353
- DE-A- 3 425 646
- US-A- 4 607 976

## Beschreibung

Die Erfindung bezieht sich auf einen Scheinwerfer für Fahrzeuge mit den Merkmalen:
- ein aus Kunststoff bestehender Reflektor ist mit einem Aufnahmeteil um eine oder um zwei im Winkel zueinander verlaufende Achsen verschwenkbar verbunden,
- mindestens eine Verbindung des Reflektors mit dem Aufnahmeteil ist von einem an das Aufnahmeteil angebrachten ersten Verbindungsteil und einem aus Kunststoff bestehenden zweiten Verbindungsteil gebildet, deren Zusammenfügen selbstrastend und parallel zur Einsetzrichtung des Reflektors in das Aufnahmeteil erfolgt,
- das zweite Verbindungsteil liegt an einer in Einsetzrichtung des Reflektors wirkenden Anlagefläche der Reflektorrückseite an, und die Verbindungsstelle zwischen dem ersten und zweiten Verbindungsteil liegt entgegen der Fügerichtung des zweiten Verbindungsteils vor der Anlagefläche des Reflektors,
- an die Rückseite des Reflektors ist ein Ansatz mit einer Raststelle angeforat, mit welcher das zweite Verbindungsteil selbstrastend an dem Ansatz befestigt ist.

Ein solcher Scheinwerfer ist aus der DE-PS 39 13 151 vorbekannt. Das zweite Verbindungsteil ist klammerartig ausgeführt, und der das zweite Verbindungsteil tragende Ansatz des Reflektors ist eine Wandung. Das klammerartige Verbindungsteil ist auf die Wandung aufgeschoben und liegt mit seinen Schenkeln unter Vorspannung an den breiten Seitenflächen der Wandung an. Dabei greift ein federnder Schenkel mit einer Rastnase in eine Öffnung der Wandung des Reflektors ein. Das erste Verbindungsteil ist ein Schraubenbolzen, welcher in einer Gewindebohrung des Aufnahmeteils verdrehbar gelagert ist und welcher an dem aus dem Aufnahmeteil nach außen ragenden Endabschnitt mit einem Griffteil versehen ist. An dem zum Reflektor hin weisenden Endabschnitt des Schraubenbolzens ist eine Kugel angebracht, welche selbstrastend in eine Kugelschale des zweiten Verbindungsteils eingesetzt ist. Bei der Montage des Scheinwerfers wird zuerst das zweite Verbindungsteil selbstrastend mit dem Reflektor verbunden und danach der Reflektor zusammen mit den an ihm befestigten Verbindungsteilen selbstrastend mit der Kugel der Schraubenbolzen verbunden. Hierbei ist es wichtig, daß der beim Zusammenfügen entstehende Druck auf den Reflektor auf die Anlagefläche an seiner Rückseite wirkt, da sonst die selbstrastende Verbindung zwischen dem zweiten Verbindungsteil und dem Reflektor durch ein entstehendes Drehmoment sich lösen oder sogar zerstört werden könnte. Die Schenkel des klammerartig ausgeführten zweiten Verbindungsteils verlaufen in der Fügerichtung des zweiten Verbindungsteils und sind länger ausgeführt als das die Kugelschale aufweisende Teilstück des zweiten Verbindungsteils. Dies ist notwendig, damit der Federweg des die Rastnase aufweisenden Schenkels ausreichend groß ist. Bei einer solchen Ausführungsform vergrößert sich durch die Verbindung des klammerartigen Verbindungsteils zum Reflektor hin die Bauhöhe des zweiten Verbindungsteils in seiner Fügerichtung. Außerdem kann sich die einzige Rastverbindung zwischen dem zweiten Verbindungsteil und der Wandung des Reflektors bei einer zwischen ihnnen wirkenden großen Kraft, welche beim Verschwenken des Reflektors entstehen kann, ungewollt lösen. Außerdem ist bei einem solchen klammerartigen Verbindungsteil ein vibrationsfreier Festsitz des Reflektors im Fahrbetrieb nicht sicher.

Aufgabe der Erfindung ist es, den im Oberbegriff des Anspruchs 1 beschriebenen Scheinwerfer derart zu gestalten, daß das zweite Verbindungsteil wegen der selbstrastenden Verbindung zum Reflektor hin in seiner Fügerichtung nicht größer bauen muß und trotz dieser geringen Bauhöhe sowohl vibrationsfrei an dem Reflektor festgesetzt werden kann als auch eine zwischen dem zweiten Verbindungsteil und dem Reflektor bestehende Kraft nicht nur an einer einzigen Raststelle wirkt. Darüber hinaus soll das zweite Verbindungsteil weiterhin an dem Reflektor ohne erhöhten Kraftaufwand selbstrastend an dem Ansatz des Reflektors festsetzbar sein.

Diese Aufgabe wird nach der Erfindung dadurch gelöst, daß
- das zweite Verbindungsteil zwischen zwei beabstandeten Ansätzen des Reflektors eingesetzt ist und mit beiden Ansätzen selbstrastend verbunden ist,
- die für das zweite Verbindungsteil dienende Anlagefläche des Reflektors zwischen den beiden Ansätzen verläuft.

Weiterhin ist es vorteilhaft, wenn die Anlagefläche des Reflektors eine solche Lage zu der Raststelle der beiden Ansätze des Reflektors aufweist, daß das zweite Verbindungsteil zwischen der Anlagefläche und den Raststellen so verspannt ist, daß es unter Vorspannung an der Anlagefläche des Reflektors anliegt. Hierbei ist der Abstand der Fläche des zweiten Verbindungsteils, mit welcher es an der Anlagefläche des Reflektors anliegt, zu den Raststellen des zweiten Verbindungsteils hin im nicht montierten und somit im entspannten Zustand etwas größer als im montierten und somit verspannten Zustand. Hierbei ist die Anlagefläche des Reflektors ein das zweite Verbindungsteil in seiner Fügerichtung spielfrei haltendes Widerlager gegenüber der Raststelle der beiden Ansätze des Reflektors. Dadurch sind zur Herstellung der spielfreien Halterung weder beim zweiten Verbindungsteil noch am Reflektor sehr enge Toleranzbereiche notwendig.

Vorteilhaft ist es weiterhin, wenn die zwischen dem ersten und zweiten Verbindungsteil bestehende Verbindungsstelle etwa auf dem Niveau der seitlich neben ihr angeordneten Raststellen liegt und eine etwa durch die Raststellen und die Verbindungsstelle gehende Linie durch die zur Verbindungsstelle mit Abstand verlaufende Schwenkachse hindurchgeht und etwa senkrecht zu dieser Schwenkachse verläuft. Dadurch entsteht beim Schwenken des Reflektors um die Schwenkachse kein um die Raststellen wirkendes Moment, da die beim Schwenken entstehende Kraft in dieser Linie verläuft. Diese Kraft entsteht, weil das zweite Verbindungsteil beim Schwenken des Reflektors einen Kreisbogenabschnitt beschreibt und das erste Verbindungsteil eine geradlinige Strecke beschreibt, welche den Kreisbogenabschnitt tangiert.

Ein weiterer Vorteil ist es, wenn das zweite Verbindungsteil an seinen, den bei den Ansätzen zugewandten Seiten zwei radiale, nach außen sich erstreckende federnde Arme aufweist, welche die Ansätze klammerartig umfassen und von denen auf jeder Seite des Verbindungsteils zumindest ein Arm selbstrastend mit dem Ansatz verbunden ist. Hierbei ist es weiterhin zweckmäßig, wenn das zweite Verbindungsteil ein mittleres zylinderförmiges Teilstück aufweist, an dessen Mantelfläche die Arme angeformt sind und in dessen Deckfläche eine zum ersten Verbindungsteil hin geöffnete Kugelpfanne eingebracht ist, in welche das erste Verbindungsteil mit einem Kugelkopf selbstrastend eingreift. Ein solches zweites Verbindungsteil kann ohne verstellbare Werkzeugteile hergestellt werden. Die Arretierung des zweiten Verbindungsteils an dem Ansatz des Reflektors ist besonders stabil, wenn die Ansätze zueinander fluchtende Wandungen sind, an welchen von den federnden Armen gebildete Fahnen mit den sich zugewandten breiten Seitenflächen an den sich abgewandten breiten Seitenflächen der Wandung unter Vorspannung anliegen.

Von Vorteil ist es weiterhin, wenn die umlaufende Seitenwandung der Kugelpfanne axial zu ihrem freien Ende hin geschlitzt ist und zwischen dieser Seitenwandung und der Fahnen jeweils ein zum freien Ende der Seitenwandung hin geöffneter Schlitz besteht. Hierbei ist es zweckmäßig, wenn der Grund der Schlitze in der Seitenwandung und der Grund des zwischen der Seitenwandung und den Fahnen bestehenden Schlitzes etwa auf demselben Niveau verläuft. Dadurch ist über den sehr sicheren, klapperfreien Festsitz des zweiten Verbindungsteils an dem Reflektor hinaus sowohl ein leichtgängiges Einrasten der Kugel in die Kugelpfanne als auch eine sehr kleine Bauhöhe des zweiten Verbindungsteils in seiner Fügerichtung gegeben.

Ebenfalls ist es vorteilhaft, wenn an eine der sich benachbarten Fahnen eine Rastnase angeformt ist, welche in eine Öffnung der Wandung des Reflektors eingreift, im Bereich der Rastnase an der Wandung des Reflektors flächig anliegt und radial zur Anlagefläche weitestgehend elastisch unnachgiebig ist, während die dieser Fahne gegenüberliegende Fahne radial zu ihrer Anlagefläche federnd ausgeführt ist und unter Vorspannung an der Wandung des Reflektors anliegt. Dadurch ist der Festsitz besonders sicher, da immer die gesamte Rastnase der Fahne in die Öffnung der Wandung des Reflektors eingreift. Hierbei ist es weiterhin zweckmäßig, wenn der Abstand der Raststelle zum mittleren Teilstück des zweiten Verbindungsteils hin kleiner ist als der unter Vorspannung an der Wandung des Reflektors anliegende freie Endabschnitt der federnden Fahne. Dadurch kann bei etwa gleich großen Querschnitten der Fahnen die Rastnase weitestgehend starr mit dem mittleren Teilstück verbunden sein, und somit können die beiden Fahnen im montierten Zustand nicht auseinanderspreizen.

Außerdem ist es vorteilhaft, wenn die Anlagefläche von der Rückseite des Reflektors selbst gebildet ist. Dadurch baut das Verbindungsteil in seiner Fügerichtung so klein wie möglich. Bei einer sehr schräg verlaufenden Rückseite ist es weiterhin vorteilhaft, wenn die Anlagefläche von dem Grund einer U-förmigen Aussparung in der Wandung des Reflektors gebildet ist. Hierbei ist es weiterhin vorteilhaft, wenn die Wandung in Einsetzrichtung des Reflektors gesehen U-förmig gestaltet ist, wobei die U-förmige Aussparung in den die Schenkel verbindenden Steg der U-Form eingebracht ist und die Fahnen, welche an der Außenseite des die Schenkel verbindenden Stegs anliegen, sich über die gesamte Innenseite der Schenkel hinaus erstrecken. Dadurch ist nicht nur die Steifigkeit der Wandung des Reflektors sehr groß, sondern es ist auch eine Montage des zweiten Verbindungsteils um 180^{o} gedreht nicht möglich.

Weiterhin ist es vorteilhaft, wenn das die Kugelpfanne aufweisende zylindrische Teilstück des zweiten Verbindungsteils an seiner Bodenfläche zwei angeformte Vorsprünge aufweist, welche den mittleren Abschnitt der Wandung klammerartig umfassen. Dadurch ist das zweite Verbindungsteil zusätzlich an dem Reflektor arretiert.

Vorteilhaft ist es weiterhin, wenn die benachbarten Fahnen, in Fügerichtung des zweiten Verbindungsteils gesehen, an ihrer Anbindungsstelle zum mittleren Teilstück hin etwa stetig in die äußere umlaufende Seitenwandung des zylindrischen Teilstücks übergehen. Dadurch entsteht an der Anbindungsstelle der Fahnen keine große Kerbwirkung.

Ein weiterer Vorteil ist es, wenn die Wandung des Reflektors in einen abgeflachten Wandungsabschnitt des schalenförmigen Reflektors übergeht. Bei einer solchen Lösung entsteht zwischen der Wandung und der Reflexionsschale des Reflektors keine Materialanhäufung, die zu Einfallstellen an der Reflexionsfläche des Reflektors führen kann.

Von Vorteil ist es weiterhin, wenn die Ansätze des Reflektors das mittlere Teilstück des zweiten Verbindungsteils mit einem solchen Spiel zwischen sich aufnehmen und zwischen Rastverbindungen des Reflektors und des zweiten Verbindungsteils ein solches Spiel besteht, daß das zweite Verbindungsteil quer zu seiner Fügerichtung zwischen den Ansätzen verschiebbar ist. Dies ist besonders dann vorteilhaft, wenn die Verschieberichtung etwa senkrecht zu einer entfernt liegenden Schwenkachse verläuft, weil dann keine Verspannungen mehr zwischen dem Reflektor und dem Tragelement entstehen können. Dies ist besonders wichtig, wenn das zweite Verbindungsteil über das erste Verbindungsteil mit einer automatischen Leuchtweiteregler-Vorrichtung gekoppelt ist, welche an dem Tragrahmen festgesetzt ist, weil auch bei kleinen radialen Kräften die Funktion der Leuchtweiteregler-Vorrichtung gestört sein kann.

Ein Ausführungsbeispiel der Erfindung ist in der Zeichnung dargestellt, und zwar zeigt
Fig. 1 einen Ausschnitt eines Aufnahmeteils, eines separaten ersten Verbindungsteils und eines zweiten Verbindungsteils des Reflektors vor ihrem Zusammenfügen,

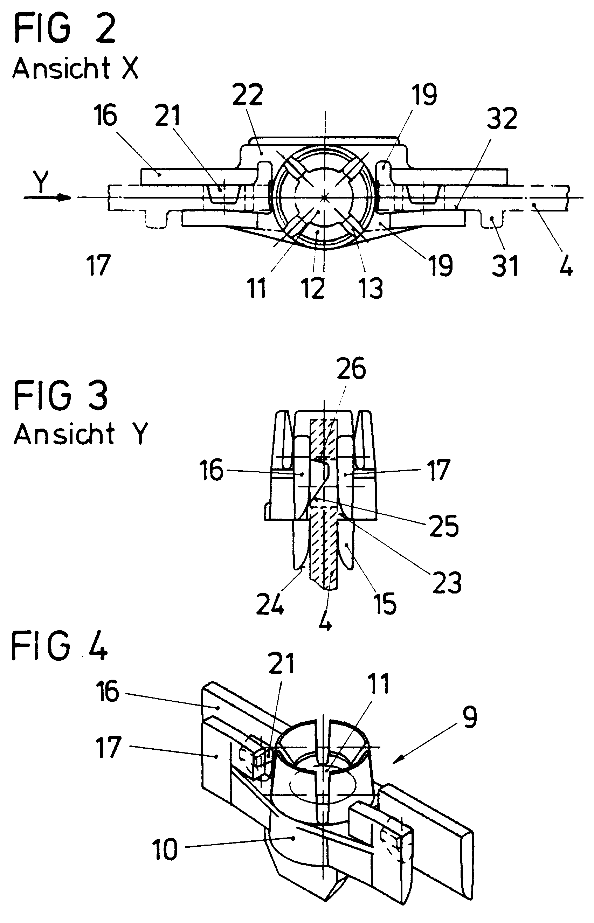

Fig. 2 eine Ansicht aus Richtung X auf das erste Verbindungsteil und
Fig. 3 eine Ansicht aus Richtung Y auf das erste Verbindungsteil.

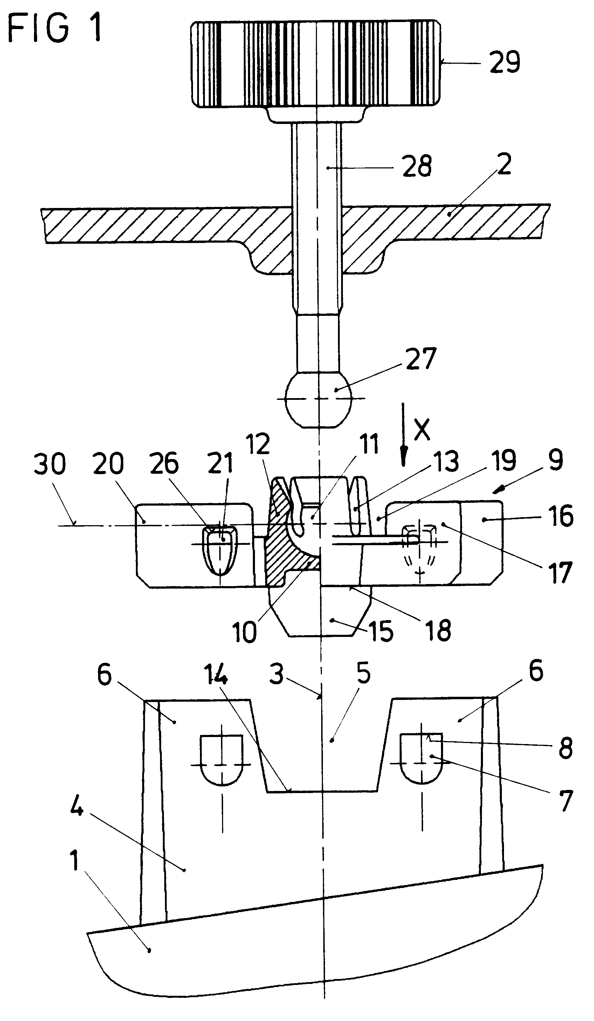

In der Zeichnung ist eine von drei Verbindungen zwischen dem Reflektor (1) und seinem Aufnahmeteil (2) dargestellt. Das Aufnahmeteil (2) kann ein Rahmen oder ein Gehäuse sein, welches zusammen mit einer Lichtscheibe das Gehäuseinnere bildet, in welches der Reflektor (1) eingesetzt ist. Die Einsetzrichtung des Reflektors (1) in das Aufnahmeteil (2) erfolgt parallel zur Längsachse (3). An die Rückseite des Reflektors (1) ist die in Einsetzrichtung des Reflektors weisende Wandung, welche von dem Ansatz (4) gebildet ist, angeformt. Die Wandstärke der Wandung (4) entspricht etwa der Wandstärke des schalenförmigen Reflektors (1). In die Wandung (4) ist von ihrem freien Ende her die U-förmig ausgeführte Aussparung (5) eingebracht. Durch die Aussparung (5) ist die Wandung (4), quer zu ihrer Hauptausdehnung gesehen, U-förmig gestaltet. Die Schenkel der U-Form bilden die Ansätze (6). In die Ansätze (6) ist jeweils die Öffnung (7) eingebracht, deren dem Reflektor (1) zugewandter innerer Flächenabschnitt (8) als Raststelle für das erste Verbindungsteil (9) dient. Mit der Wandung (4) ist das zweite Verbindungsteil (9) selbstrastend verbindbar. In Fig. 1 ist das zweite Verbindungsteil (9) in Montagerichtung zur Wandung (4) des Reflektors (1) dargestellt.

Das zweite Verbindungsteil (9) ist, wie der Reflektor (1), aus Kunststoff hergestellt und weist das mittlere zylindrische Teilstück (10) mit der Längsachse (3) auf, welches auch die Symmetrielinie für die Wandung (4) ist. In die dem Aufnahmeteil (2) zugewandte Deckfläche des zylindrischen Teilstücks (10) ist die Kugelpfanne (11) eingebracht. In die umlaufende Seitenwandung (12) der Kugelpfanne sind von ihrer Stirnfläche her parallel zur Längsachse (3) verlaufende Schlitze (13) eingebracht, damit die so gebildeten Seitenwandungsabschnitte radial nach außen ausfedern können. Der Außendurchmesser des zylindrischen Teilstücks (10) ist kleiner, als die Grundfläche (14) der Aussparung (5) in der Wandung (4) des Reflektors (1) lang ist. An die Bodenfläche (18) des zylindrischen Teilstücks (10) sind parallel zur Hauptausdehnung der Wandung (4) des Reflektors (1) verlaufende wandungsförmige Vorsprünge (15) angeformt, welche nach dem Aufsetzen des zweiten Verbindungsteils (9) auf die Wandung (4) die Wandung (4) klammerartig umfassen. An sich abgewandte Außenseitenabschnitte des zylindrischen Teilstücks (10) sind jeweils zwei sich benachbarte federnde Arme (16 und 17) angeformt. Die Arme (16) sind an den zwischen der Bodenfläche (18) und den Schlitzen (13) erstreckenden Abschnitt des zylindrischen Teilstücks (10) angeformt. Die Arme (16 und 17) sind als Fahnen ausgeführt, welche etwa parallel zueinander verlaufen und etwa mit den wandungsförmigen Vorsprüngen (15) fluchten. Die Fahnen (16 und 17) sind, quer zu ihren breiten Seitenflächen gesehen, winkelförmig ausgeführt, wobei der eine Schenkel an das Teilstück (10) angeformt ist und der andere Schenkel zum Aufnahmeteil (2) hinweist und zusammen mit der Seitenwandung (12) der Kugelpfanne (11) den Schlitz (19) bildet, dessen Grund etwa auf demselben Niveau wie der Grund der Schlitze (13) verläuft. Die inneren breiten Seitenflächen (20) der Fahnen (16) liegen in einer Ebene und sind in der Nähe des zylindrischen Teilstücks (10) mit der Rastnase (21) versehen. Zwischen der Rastnase (21) und dem Teilstück (12) verläuft die Fahne (16), parallel zur Längsachse (3) gesehen, in den konkaven Bogen (22) zur Fahne (17) hin und geht etwa stetig in die äußere umlaufende Seitenwandung (12) des Teilstücks (10) über. Die Fahne (17) geht ebenfalls stetig in die Seitenwandung (12) des Teilstücks über und erstreckt sich von ihrer Anbindungsstelle am Teilstück (12) zur Rastnase (21) hin mit dem parallel zu der Fahne (16) verlaufenden Endabschnitt über die Rastnase (21) hinaus. Die Fahnen (16 und 17) und die wandungsförmigen Vorsprünge (15) weisen an dem den Reflektor (1) zugewandten inneren Randabschnitt die Auflaufschräge (23 bzw. 24) auf. Diese Auflaufschrägen (23 und 24) dienen zum Einfädeln der Wandung (4) zwischen die Fahnen (16 und 17) und die wandungsförmigen Vorsprünge (15). Nach diesem Einfädeln gleiten die Ansätze (6) der Wandung (4) mit ihrem freien Ende an der Auflaufschräge (25) der Rastnase (21) entlang, wobei die Fahne (17) nach außen auffedert. Hierbei federt im wesentlichen nur die Fahne (17) nach außen, da diese mit ihrem Endabschnitt (32) in einem weiteren Abstand zum Teilstück (10) hin an der Wandung (4) anliegt als die Fahne (16) mit ihrer Rastnase (21). Nach dem weiteren Aufschieben des zweiten Verbindungsteils (9) auf die Wandung (4) rasten die Rastnasen (21) in die Öffnung (7) der Ansätze (6) ein. Ein besonders guter Festsitz des zweiten Verbindungsteils (9) an der Wandung (4) ist gegeben, wenn die Grundfläche (14) der Aussparung (5) der Wandung (4) einen kleineren Abstand zu dem Flächenabschnitt (8) der Öffnung (7) des Ansatzes (6) aufweist als das zweite Verbindungsteil (9) mit seiner Bodenfläche (18) zu der von dem Reflektor (1) weg weisenden Fläche (26) der Nase (21). Hierbei ist das zweite Verbindungsteil (9) zwischen der Grundfläche (14) und dem Flächenabschnitt (8) der Wandung (4) verspannt und somit parallel zur Längsachse (3) spielfrei gehalten. Bei einer starken Verspannung ist es wichtig, die Fahnen (16 und 17) bei der Montage so weit zum Reflektor (1) hin zu drücken, bis ihre Rastnasen (21) in die Öffnungen (7) einrasten. Dies ist nicht notwendig, wenn die an dem Flächenabschnitt (8) der Wandung (4) anliegende Fläche (26) zum freien Ende der Nase hin schräg verläuft und als Gleitfläche dient. Nach der Montage des zweiten Verbindungsteils (9) kann der Reflektor (1) in das Aufnahmeteil (2) eingesetzt werden. Dabei rastet die Kugel (27) einer in dem Aufnahmeteil (2) drehbar gelagerten Verstellschraube, welche von dem ersten Verbindungsteil (28) gebildet ist, selbstrastend in die Kugelpfanne (11) ein, wobei die Kraft, die beim selbstrastenden Verbinden entsteht, in der Längsachse (3) liegt und auf die als Anlagefläche dienende Grundfläche (14) der Wandung (4) wirkt. Die Verstellschraube (28) ist an dem aus dem Aufnahmeteil (2) nach außen ragenden Endabschnitt mit dem Griffteil (29) versehen. Beim Verdrehen der Verstellschraube (28) schwenkt der Reflektor (1) um eine in der Zeichnung nicht dargestellte Schwenkachse. Zu dieser Schwenkachse verläuft die Wandung (4) in seiner Hauptausdehnung senkrecht, und durch diese Schwenkachse geht eine etwa durch die Flächenabschnitte (8) der Ansätze (9) und den Mittelpunkt der Kugelpfanne (11) gehende Linie (30). Beim Verdrehen der Verstellschraube (28) beschreibt ihre Kugel (27) eine geradlinige Strecke, wobei das zweite Verbindungsteil (9) mit seiner Kugelpfanne (11) einen Kreisbogenabschnitt um die nicht dargestellte Schwenkachse beschreibt. Sitzt hierbei das zweite Verbindungsteil (9) an der Wandung (4) des Reflektors (1) in allen Richtungen fest, so entsteht eine radiale Kraft zur Längsachse (3). Diese radiale Kraft entsteht nicht, wenn das zweite Verbindungsteil (9) parallel zur Linie (30) an dem Wandungsabschnitt (4) verschiebbar ist. Dies ist bei dem in der Zeichnung dargestellen Ausführungsbeispiel möglich, weil das Teilstück (10) einen kleineren Außendurchmesser aufweist, als die Anlagefläche (14) lang ist und die Flächenabschnitte (8) parallel zur Linie (30) länger ausgeführt sind, als die Rastnasen (21) breit sind. Dies ist besonders wichtig, wenn die Verstellschraube (28) mit einer Leuchtweiteregler-Vorrichtung gekoppelt ist, weil diese bei radialen Kräften in ihrer Funktion gestört sein kann.

Die Fahnen (16) sind radial nach außen länger ausgeführt als die Fahnen (17), welche zwischen den Schenkeln (31) der in Fügerichtung des zweiten Verbindungsteils (9) gesehenen U-förmig gestalteten Wandung (4) angeordnet sind. Dadurch ist ein Montieren des ersten Verbindungsteils um 180^{o} nicht möglich, weil dann die längeren Fahnen (16) nicht zwischen die Schenkel (31) eingefügt werden können.

### Bezugszahlen

### Scheinwerfer für Fahrzeuge

- 1: Reflektor
- 2: Aufnahmeteil
- 3: Wandung
- 4: Wandung
- 5: Aussparung
- 6: Ansatz
- 7: Öffnung
- 8: Flächenabschnitt
- 9: erstes Verbindungsteile
- 10: Teilstück
- 11: Kugelpfanne
- 12: Seitenwandung
- 13: Schlitze
- 14: Grundfläche
- 15: Vorsprünge
- 16: Arm
- 17: Arm
- 18: Bodenfläche
- 19: Schlitz
- 20: Seitenflächen
- 21: Rastnase
- 22: Bogenabschnitt
- 23: Auflaufschräge
- 24: Auflaufschräge
- 25: Auflaufschräge
- 26: Fläche
- 27: Kugel
- 28: zweites Verbindungsteil
- 29: Griffteil
- 30: Linie
- 31: Schenkel
- 32: Endabschnitt

## Patentansprüche

1. Scheinwerfer für Fahrzeuge, mit den Merkmalen:
- ein aus Kunststoff bestehender Reflektor (1) ist mit einem Aufnahmeteil (2) um eine oder um zwei im Winkel zueinander verlaufende Achsen verschwenkbar verbunden,
- mindestens eine Verbindung des Reflektors (1) mit dem Aufnahmeteil (2) ist von einem an das Aufnahmeteil (2) angebrachten ersten Verbindungsteil (28) und einem aus Kunststoff bestehenden zweiten Verbindungsteil (9) gebildet, deren Zusammenfügen selbstrastend und parallel zur Einsetzrichtung des Reflektors (1) in das Aufnahmeteil (2) erfolgt,
- das zweite Verbindungsteil (9) liegt an einer in Einsetzrichtung des Reflektors (1) wirkenden Anlagefläche (14) der Reflektorrückseite an, und die Verbindungsstelle zwischen dem ersten und zweiten Verbindungsteil (28 und 9) liegt in Fügerichtung des zweiten Verbindungsteils (9) vor der Anlagefläche (14) des Reflektors (1),
- an die Rückseite des Reflektors (1) ist ein Ansatz (6) mit einer Raststelle (8) angeformt, mit welcher das zweite Verbindungsteil (9) selbstrastend an dem Ansatz (6) befestigt ist,
dadurch gekennzeichnet, daß
- das zweite Verbindungsteil (9) zwischen zwei beabstandeten Ansätzen (6) des Reflektors (1) eingesetzt ist und mit beiden Ansätzen (6) selbstrastend verbunden ist,
- die für das zweite Verbindungsteil (9) dienende Anlagefläche (14) des Reflektors zwischen den beiden Ansätzen (6) verläuft.

2. Scheinwerfer nach Anspruch 1, dadurch gekennzeichnet, daß die Anlagefläche (14) des Reflektors eine solche Lage zu der Raststelle (8) der beiden Ansätze (6) des Reflektors (1) aufweist, daß das zweite Verbindungsteil (9) zwischen der Anlagefläche (14) und den Raststellen (8) so verspannt ist, daß es unter Vorspannung an der Anlagefläche (14) des Reflektors (1) anliegt.

3. Scheinwerfer nach Anspruch 1 oder 2, dadurch gekennzeichnet, daß die zwischen dem ersten und zweiten Verbindungsteil (28 und 9) bestehende Verbindungsstelle etwa auf dem Niveau der seitlich neben ihr angeordneten Raststellen (8) liegt.

4. Scheinwerfer nach Anspruch 3, dadurch gekennzeichnet, daß eine etwa durch die beiden Raststellen (8) und die Verbindungsstelle gehende Linie (30) durch die zur Verbindungsstelle mit Abstand verlaufende Schwenkachse hindurchgeht und etwa senkrecht zu dieser Schwenkachse verläuft.

5. Scheinwerfer nach einem der Ansprüche 1 bis 4, dadurch gekennzeichnet, daß das zweite Verbindungsteil (9) an seinen den beiden Ansätzen (6) zugewandten Seiten zwei radial nach außen sich erstreckende federnde Arme (16 und 17) aufweist, welche die Ansätze (6) klammerartig umfassen und von denen auf jeder Seite des Verbindungsteils zumindest ein Arm (16) selbstrastend mit dem Ansatz (6) verbunden ist.

6. Scheinwerfer nach Anspruch 5, dadurch gekennzeichnet, daß die Ansätze (6) zueinander fluchtende Wandungen sind, an welchen die von den federnden Armen (16 und 17) gebildeten Fahnen mit den sich zugewandten breiten Seitenflächen an den sich abgewandten breiten Seitenflächen der Wandung (4) unter Vorspannung anliegen.

7. Scheinwerfer nach einem der Ansprüche 1 bis 6, dadurch gekennzeichnet, daß das zweite Verbindungsteil (9) ein mittleres zylinderförmiges Teilstück (10) aufweist, an dessen Mantelfläche die Arme (16 und 17) angeformt sind und in dessen Deckfläche eine zum ersten Verbindungsteil (4) hin geöffnete Kugelpfanne (11) eingebracht ist, in welche das erste Verbindungsteil mit einem Kugelkopf (27) selbstrastend eingreift und daß die umlaufende Seitenwandung (12) der Kugelpfanne (11) zu ihrem freien Ende hin geschlitzt ist und zwischen dieser Seitenwandung (12) und den Fahnen (16 und 17) jeweils ein zum freien Ende der Seitenwandung (12) hin geöffneter Schlitz (19) besteht.

8. Scheinwerfer nach einem der Ansprüche 1 bis 7, dadurch gekennzeichnet, daß an einer der sich benachbarten Fahnen (16 und 17) eine Rastnase (21) angeformt ist, welche in eine Öffnung (7) der Wandung (4) des Reflektors (1) eingreift, im Bereich der Rastnase (21) an der Wandung des Reflektors (1) flächig anliegt und radial zur Anlagefläche (14) weitestgehend elastisch unnachgiebig ist, während die dieser Fahne (16) gegenüberliegende Fahne (17) radial zu ihrer Anlagefläche federnd ausgeführt ist und unter Vorspannung an der Wandung (4) des Reflektors (1) anliegt und daß der Abstand der Raststelle (8) zum mittleren Teilstück (10) hin kleiner ist als der unter Vorspannung an der Wandung (4) des Reflektors (1) anliegende freie Endabschnitt (32) der federnden Fahne (17).

9. Scheinwerfer nach einem der Ansprüche 1 bis 8, dadurch gekennzeichnet, daß die Anlagefläche unmittelbar von der Rückseite des Reflektors (1) gebildet ist.

10. Scheinwerfer nach einem der Ansprüche 1 bis 8, dadurch gekennzeichnet, daß die Anlagefläche (14) von dem Grund einer U-förmigen Aussparung (5) in der Wandung (4) des Reflektors (1) gebildet ist.

11. Scheinwerfer nach Anspruch 10, dadurch gekennzeichnet, daß die Wandung (4), in Einsetzrichtung des Reflektors (1) gesehen, U-förmig gestaltet ist, wobei die U-förmige Aussparung (5) in den die Schenkel (31) verbindenden Steg der U-Form eingebracht ist und die Fahne (16), welche an der Außenseite des die Schenkel (31) verbindenden Stegs anliegen, sich über die Innenseiten der Schenkel (31) hinaus erstrecken.

12. Scheinwerfer nach einem der Ansprüche 1 bis 11, dadurch gekennzeichnet, daß das die Kugelpfanne (11) aufweisende zylindrische Teilstück (10) des zweiten Verbindungsteils (9) an seiner Bodenfläche (18) zwei angeformte Vorsprünge (15) aufweist, welche den mittleren Abschnitt der Wandung (4) klammerartig umfassen.

13. Scheinwerfer nach einem der vorstehenden Ansprüche, dadurch gekennzeichnet, daß die benachbarten Fahnen (16 und 17), in Fügerichtung des zweiten Verbindungsteils (9) gesehen, an ihrer Anbindungsstelle zum mittleren Teilstück (10) hin etwa stetig in die äußere umlaufende Seitenwandung (12) des Teilstücks (10) übergehen.

14. Scheinwerfer nach einem der vorstehenden Ansprüche, dadurch gekennzeichnet, daß die Wandung (4) des Reflektors (1) in einen abgeflachten Wandungsabschnitt des schalenförmigen Reflektors (1) übergeht.

15. Scheinwerfer nach einem der vorstehenden Ansprüche, dadurch gekennzeichnet, daß die Ansätze (6) des Reflektors (1) das mittlere Teilstück (10) mit einem solchen Spiel zwischen sich aufnehmen und zwischen den Rastverbindungen (8, 21) ein solches Spiel besteht, daß das zweite Verbindungsteil (9) quer zu seiner Fügerichtung zwischen den Ansätzen (6) verschiebbar ist.

## Claims

1. A headlamp for vehicles, having the features:
- a reflector (1) consisting of plastic is connected to a receiver part (2) so that it can swivel about one axis or two axes extending at an angle to each other,
- at least one connection of the reflector (1) to the receiver part (2) is formed by a first connecting part (28) mounted on the receiver part (2) and a second connecting part (9) consisting of plastic, the assembly of which is effected in a self-locking manner and parallel to the direction of insertion of the reflector (1) in the receiver part (2),
- the second connecting part (9) is seated against a bearing surface (14) on the back of the reflector, which bearing surface acts in the direction of insertion of the reflector (1), and the joint location between the first and the second connecting parts (28 and 9) is situated in front of the bearing surface (14) of the reflector (1) in the direction of joining of the second connecting part (9),
- a projection (6) having a locking location (8) is integrally formed on the back of the reflector (1), by means of which locking location the second connecting part (9) is fastened in a self-locking manner to the projection (6),
characterised in that
- the second connecting part (9) is inserted between two spaced-apart projections (6) of the reflector (1) and is connected in a self-locking manner to both projections (6),
- the bearing surface (14) of the reflector which serves for the second connecting part (9) extends between the two projections (6).

2. A headlamp according to claim 1, characterised in that the bearing surface (14) of the reflector has a position in relation to the locking location (8) of the two projections (6) of the reflector (1) such that the second connecting part (9) is braced between the bearing surface (14) and the locking locations (8) so that it is seated against the bearing surface (14) of the reflector (1) under prestress.

3. A headlamp according to claim 1 or 2, characterised in that the joint location which exists between the first and second connecting parts (28 and 9) is situated approximately at the level of the locking locations (8) disposed laterally near it.

4. A headlamp according to claim 3, characterised in that a line (30) which passes approximately through the two locking locations (8) and the joint location passes through the swivelling axis which extends at a distance from the joint location and runs approximately perpendicularly to this swivelling axis.

5. A headlamp according to any one of claims 1 to 4, characterised in that the second connecting part (9) has two outwardly extending resilient arms (16 and 17) on its sides facing the two projections (6), which arms embrace the projections (6) in the manner of clamps, and at least one arm (16) of which on each side of the connecting part is connected in a self-locking manner to the projection (6).

6. A headlamp according to claim 5, characterised in that the projections (6) are walls which are aligned with each other, against which the lugs formed by the resilient arms (16 and 17) are seated under prestress, with the mutually facing wide lateral faces of the lugs on the wide lateral faces of the wall (4) which face away from each other.

7. A headlamp according to any one of claims 1 to 6, characterised in that the second connecting part (9) has a central cylindrical portion (10), on the curved surface of which the arms (16 and 17) are integrally formed, and in the top face of which ball socket (11) is incorporated which is open towards the first connecting part (4) and in which a ball head (27) of the first connecting part engages in a self-locking manner, and that the surrounding sidewall (12) of the ball socket (11) is slit towards its free end and a slit (19) which is open towards the free end of the sidewall (12) exists between this sidewall (12) and each of the lugs (16 and 17).

8. A headlamp according to any one of claims 1 to 7, characterised in that a locking projection (21) is integrally formed on one of the mutually adjacent lugs (16 and 17), which locking projection engages in an opening (7) in the wall (4) of the reflector (1), is seated flat against the wall of the reflector (1) in the region of the locking projection (21) and is substantially elastically inflexible radially towards the bearing surface (14), whilst the lug (17) opposite this lug (16) is of resilient construction radially towards its bearing surface and is seated under prestress against the wall (4) of the reflector (1), and that the distance from the locking location (8) to the central portion (10) is less than that of the free end section (32) of the resilient lug (17) which is seated under prestress against the wall (4) of the reflector (1).

9. A headlamp according to any one of claims 1 to 8, characterised in that the bearing surface is formed directly from the back of the reflector (1).

10. A headlamp according to any one of claims 1 to 8, characterised in that the bearing surface (14) is formed from the base of a U-shaped recess (5) in the wall (4) of the reflector (1).

11. A headlamp according to claim 10, characterised in that the wall (4) is fashioned in the shape of a U as seen in the direction of insertion of the reflector (1), wherein the U-shaped recess (5) is built into the crosspiece of the U-shape which joins the limbs (31), and the lugs (16) which are seated against the outside of the crosspiece joining the limbs (31) extend outwards beyond the inner faces of the limbs (31).

12. A headlamp according to any one of claims 1 to 11, characterised in that the cylindrical portion (10) of the second connecting part (9) which comprises the ball socket (11) has two projections (15) integrally formed on its bottom face (18), which projections embrace the central section of the wall (4) in the manner of clamps.

13. A headlamp according to any one of the preceding claims, characterised in that, as seen in the direction of joining of the second connecting part (9), the adjacent lugs (16 and 17) extend approximately continuously into the externally surrounding sidewall (12) of the portion (10) at their point of attachment to the central portion (10).

14. A headlamp according to any one of the preceding claims, characterised in that the wall (4) of the reflector (1) extends into a flattened wall section of the dish-shaped reflector (1).

15. A headlamp according to any one of the preceding claims, characterised in that the projections (6) of the reflector (1) receive the central portion (10) with a clearance between them, and a clearance exists between the locking connections (8, 21), such that the second connecting part (9) can be displaced between the projections (6) transversely to its direction of joining.

## Revendications

1. Phare pour véhicules avec les éléments suivants :
- un réflecteur (1) en matière plastique est relié en pivotement à un élément de réception (2) autour d'un axe ou de deux axes en angle l'un par rapport à l'autre,
- au moins une liaison du réflecteur (1) à l'élément de réception (2) est formée par un premier élément de liaison (28) monté sur l'élément de réception (2) et par un second élément de liaison (9) en matière plastique, dont l'assemblage se fait en encliquetage et parallèlement à la direction de mise en place du réflecteur (1) dans l'élément de réception (2),
- le second élément de liaison (9) est en appui sur une surface d'appui (14) de la face arrière du réflecteur (1), la surface d'appui (14) agissant en direction de mise en place du réflecteur (1), et le point de jonction entre le premier et le second élément de liaison (28 et 9) se trouve en direction d'assemblage du second élément de liaison (9) devant la surface d'appui (14) du réflecteur (1),
- sur la face arrière du réflecteur (1) est formée une embase (6) avec un point d'encliquetage (8) avec lequel le second élément de liaison (9) est fixé en encliquetage sur l'embase (6), caractérisé en ce que :
- le second élément de liaison (9) est mis en place entre deux embases (6) du réflecteur (1) situées à distance l'une de l'autre et est relié en encliquetage aux deux embases (6),
- la surface d'appui (14) du réflecteur (1) servant au second élément de liaison (9) s'étend entre les deux embases (6).

2. Phare selon la revendication 1, caractérisé en ce que la surface d'appui (14) du réflecteur présente par rapport au point d'encliquetage (8) des deux embases (6) du réflecteur (1) une position telle que le second élément de liaison (9) est serré entre la surface d'appui (14) et les points d'encliquetage (8) de telle manière qu'il prend appui sous précontrainte sur la surface d'appui (14) du réflecteur (1).

3. Phare selon l'une ou l'autre des revendications 1 et 2, caractérisé en ce que le point de jonction entre le premier et le second élément de liaison (28 et 9) est situé approximativement au niveau des points d'encliquetage (8) agencés à côté dudit point de jonction.

4. Phare selon la revendication 3, caractérisé en ce qu'une ligne (30) passant approximativement à travers les deux points d'encliquetage (8) et le point de jonction traverse l'axe de pivotement s'étendant à distance du point de jonction, et en ce que cette ligne est approximativement perpendiculaire à cet axe de pivotement.

5. Phare selon l'une quelconque des revendications 1 à 4, caractérisé en ce que le second élément de liaison (9) présente sur ses côtés orientés vers les deux embases (6) deux bras élastiques (16 et 17) s'étendant vers l'extérieur, qui enserrent les embases (6) à la manière d'une agrafe et dont au moins un bras (16), sur chaque côté de l'élément de liaison, est relié par encliquetage à l'embase (6).

6. Phare selon la revendication 5, caractérisé en ce que les embases (6) sont des parois en alignement l'une de l'autre, sur lesquelles des pattes formées par les bras (16 et 17) élastiques sont en appui sous précontrainte avec leurs larges faces latérales orientées l'une vers l'autre contre les larges faces latérales détournées l'une de l'autre de la paroi (4).

7. Phare selon l'une quelconque des revendications 1 à 6, caractérisé en ce que le second élément de liaison (9) présente un tronçon cylindrique (10) médian sur l'enveloppe duquel sont formés les bras (16 et 17) et dans la surface de recouvrement duquel est montée une cuvette sphérique (11) ouverte vers le premier élément de liaison (28), dans laquelle s'engage en encliquetage le premier élément de liaison avec une tête en forme de boule (27), en ce que la paroi latérale (12) circonférentielle de la cuvette sphérique (11) est fendue vers son extrémité libre et, en ce qu'il existe entre cette paroi latérale (12) et les pattes (16 et 17), une fente (19) respective, ouverte vers l'extrémité libre de la paroi latérale (12).

8. Phare selon l'une quelconque des revendications 1 à 7, caractérisé en ce que sur l'une des pattes (16 et 17) voisines l'une de l'autre est formé un taquet d'encliquetage (21) qui s'engage dans une ouverture (7) de la paroi (4) du réflecteur (1), qui repose à plat sur la paroi du réflecteur (1) dans la région du taquet d'encliquetage (21), et qui n'est pratiquement pas élastiquement flexible en direction radiale par rapport à la surface d'appui (14), tandis que la patte (17) située en face de cette patte (16) est réalisée élastique en direction radiale par rapport à sa surface d'appui et repose sous précontrainte sur la paroi (4) du réflecteur (1), et en ce que la distance entre le point d'encliquetage (8) et le tronçon (10) médian du second élément de liaison (9) est inférieure au tronçon d'extrémité (32) libre de la patte (17) faisant ressort, qui repose sous précontrainte contre la paroi (4) du réflecteur (1).

9. Phare selon l'une quelconque des revendications 1 à 8, caractérisé en ce que la surface d'appui 14 est formée directement par la face arrière du réflecteur (1).

10. Phare selon l'une quelconque des revendications 1 à 8, caractérisé en ce que la surface d'appui (14) est formée par le fond d'un évidement (5) en forme de U dans la paroi (4) du réflecteur (1).

11. Phare selon la revendication 10, caractérisé en ce que, vue en direction de mise en place du réflecteur (1), la paroi (4) est réalisée en forme de U, l'évidement (5) en forme de U étant ménagé dans la traverse qui relie les branches de la forme en U, et la patte (16), qui prend appui sur la face extérieure de la traverse reliant les branches (31), s'étendant au-delà de la face intérieure toute entière des branches (31).

12. Phare selon l'une quelconque des revendications 1 à 11, caractérisé en ce que le tronçon cylindrique (10) du second élément de liaison (9), qui contient la cuvette sphérique (11), présente sur la surface de son fond (18) deux saillies (15) qui enserrent à la manière d'une agrafe le tronçon médian de la paroi (4).

13. Phare selon l'une quelconque des revendications précédentes, caractérisé en ce que vues en direction d'assemblage du second élément de liaison (9), les pattes (16 et 17) voisines se transforment à leur point de raccordement au tronçon (10) médian de façon à peu près continue pour former la paroi latérale (12) extérieure circonférentielle du tronçon (10).

14. Phare selon l'une quelconque des revendications précédentes, caractérisé en ce que la paroi (4) du réflecteur (1) se transforme en un tronçon de paroi aplati du réflecteur (1) en forme de cuvette.

15. Phare selon l'une quelconque des revendications précédentes, caractérisé en ce que les embases (6) du réflecteur (1) reçoivent entre elles le tronçon (10) médian avec un jeu tel, et en ce qu'il existe entre les liaisons à encliquetage (8, 21) un jeu tel que le second élément de liaison (9) est susceptible d'être déplacé entre les embases (6) transversalement à sa direction d'assemblage.
